# EUROPEAN PATENT SPECIFICATION

(11) **EP 3 554 679 B1**
(45) Date of publication and mention of the grant of the patent: **06.01.2021**
(21) Application number: 17835616.8
(22) Date of filing: 14.12.2017
(51) Int. Cl.: B01J 8/10, B01J 19/20, B01J 8/38, B01J 8/36, B01D 53/96

(54) **REACTOR FOR REACTIVATING SOLIDS**
REAKTOR ZUR REAKTIVIERUNG VON FESTSTOFFEN
RÉACTEUR DE RÉACTIVATION DE SOLIDES

(30) Priority: 15.12.2016 FR 1662483
(43) Date of publication of application: 23.10.2019
(73) Proprietor: LAB, 69007 Lyon (FR)
(72) Inventor: TABARIES, Frank, 83430 Saint Mandrier Sur Mer (FR); SIRET, Bernard, 69200 Venissieux (FR)
(74) Representative: Lavoix
(86) International application number: PCT/EP2017/082785
(87) International publication number: WO 2018/109072

(56) References cited:
- EP-A1- 1 980 581
- DE-A1- 3 408 047
- FR-A1- 2 911 518
- US-A1- 2010 137 463
- US-A1- 2015 016 211

## Description

The present invention relates to a reactor for reactivating solids by placing the latter in contact with a gaseous reactivation fluid.

The application field of the invention is primarily, but not exclusively, the gas cleaning, in particular cleaning of fumes emitted by combustion units, such as incinerators, plants producing electricity from combustion units, such as waste to energy plants, plants producing electricity from fossil fuels, cement furnaces, oil refineries, etc.

Indeed, many industrial activities generate fumes containing sulphur oxides, such as sulphur dioxide SO₂, hydrochloric acid HCl and other acid pollutants, which must be treated before releasing the cleaned off gas into the atmosphere. To treat these various acid pollutants contained in fumes, several methods are known and commonly used in commercial practice.

First, there are wet methods, in which the fumes to be cleaned are put in contact with a washing liquid, which, by absorption, captures the acid pollutants and neutralizes them. Several technologies are available. Although these wet methods are extremely effective and produce comparatively few solid residues, they are somewhat expensive in terms of investment.

Next, there are the dry methods, in which an alkaline neutralizing reagent, such as lime, quicklime or sodium bicarbonate, is injected into the fumes to be treated in order to react with the acid pollutants to form salts. The products of this reaction, as well as the excess reagent, i.e., the part of the reagent not having reacted with the pollutants captured, are collected in a filter, for example a bag filter or an electrostatic precipitator. These dry methods, which demand a lower investment, may suffer from substantially higher operating costs than those of wet methods, in particular if the reagent is used incorrectly. Indeed, this excess of reagent is always necessary for in-depth cleaning, which results in higher costs for this reagent, and above all for the treatment and discharge of the solid residues collected downstream.

An effort has been made to improve this situation with semidry methods, in which the alkaline reagent is put in contact with the fumes to be cleaned not in solid form, but in the form of a liquid or slurry, typically a lime milk. In contact with hot fumes, the water of the aforementioned liquid or the aforementioned slurry evaporates, ultimately leaving behind solids that have a composition similar to that of the residues of the dry methods and that are collected on a filter, for example a bag filter or electrostatic precipitator. This situation represents progress relative to dry systems, since the temporary existence of a wet phase makes it possible to reduce the necessary excess reagent, but on the other hand, this limits the possible energy recovery. The quantity of reagents consumed is lower, as well as the quantity of residues produced. This also implies greater complexity, since an atomization-evaporation tower is necessary to yield the reagent to be put in contact with the fumes to be cleaned.

An effort has also been made to decrease the quantity of reagents and residues produced in dry systems, by moistening the reagent beforehand, for example by spraying water on lime in a screw or drum, before putting in contact with the hot fumes. A sort of semidry method is thus produced at a lower cost, which takes advantage of the surface moistening of the alkaline reagent.

In all cases, the dry and semidry methods result in the collection of solids made up of a mixture of alkaline reagent, not having reacted with the acid pollutants of the fumes to be cleaned, and residues resulting from the cleaning of these fumes. An effort has been made to reactivate these solids in order to recycle them, as neutralization reagent in the fumes to be treated. The reactivation of the residues is intended to simultaneously favour solid-solid reactions, refresh the surface of the grains, and provide local remoistening, so as to facilitate the subsequent capture of acid pollutants.

In practice, it has thus been disclosed to reactivate the recycled solids by spraying water. This reactivation method is difficult to carry out when the solids are hygroscopic: if too much water is allowed, the solids become lumpy and difficult to transport, whereas if not enough water is used, the method is not very effective.

It has also been proposed to reactivate the recycled solids by exposing them to steam, as described in EP 1 716 910. This reactivation using steam is preferable by far to reactivation by spraying water. This being said, the implementation of a contactor, such as a fluidized bed, to expose the solids to be reactivated to the steam raises problems and is fairly costly in terms of investment. From an operating viewpoint, operation performance of such a contactor can be delicate: if the solids are moistened too much, they may become sticky and/or lumpy. They are then difficult to transport and can cause blockages or jams. Conversely, if the solids are not moistened enough by the steam, their reactivation becomes insufficient. To address this issue, EP 1 949 956 proposed an improved reactivation reactor, ensuring a sufficient contact time of at least several minutes, between the solids to be reactivated and a gaseous reactivation fluid. However, here again, it has been observed that this type of reactor can be subject to jamming, in particular for large units.

The aim of the present invention is to propose a new reactor for reactivating solids by placing the latter in contact with a gaseous reactivation fluid, this simultaneously simple, economical and high-performing.

To that end, the invention relates to a reactor for reactivating solids as defined in claim 1.

When the reactor according to the invention is in use, its duct is supplied with a gaseous reactivation fluid, for example steam or a gaseous mixture containing water, such that this reactivation fluid enters the chamber of the reactor and reaches, via the intake orifice(s) of the duct, the solids contained in the bottom of the trough of the reactor. At the same time, the two shafts of the reactor, which are parallel and adjacent, ensure, owing to their first part, the conveying of the solids from the inlet of the reactivation chamber toward the outlet this chamber, the respective coils of these first parts of the shaft jointly forming a sort of dual screw for transporting solids. The second respective parts of the two shafts in turn ensure aeration and mixing of the solids pushed by the first parts of the shafts, by stirring these solids via the respective blades of each of these second parts of the shafts: these stirred solids are thus putting in contact with the gaseous fluid distributed by the duct very efficiently, then significantly improving the reactivation of the solids. This effect is even more pronounced as the invention sets out that the length of the second parts of the shafts represents between 67% and 90% of the sum of the respective lengths of the first and second parts: conversely, if the first part of the shaft was extended further, if applicable until reaching the outlet of the reactivation chamber, the first part of shafts would tend to tamp the solids and therefore to limit exchange with the gaseous reactivation fluid, also with risks of becoming sticky and/or lumpy, this tamping of the solids being able to become such that the shafts are blocked. In other words, the arrangement of the two shafts and the duct of the reactivation reactor according to the invention, which is provided so that the second respective parts of the two shafts, under which the duct runs, are much longer than the first respective parts of these shafts, makes it possible both to reactivate the solids more effectively via the gaseous fluid distributed by the duct at the bottom of the trough and to limit the risks of blocking. The reactivation reactor according to the invention thus performs, in an integrated, simple and cost-effective manner, the following functions: supplying the solids to be reactivated at the inlet of the trough, transporting the solids inside the trough toward the outlet of the latter, putting the solids in contact with the gaseous reactivation fluid without tamping the solids, and discharging the reactivated solids for recycling thereof by reintroduction into fumes to be cleaned.

Additional advantageous features of the reactivation reactor according to the invention are specified in the dependent claims.

The invention will be better understood upon reading the following description, provided solely as an example and done in reference to the drawings, in which:
- figure 1 is a schematic perspective view of a reactivation reactor according to the invention, certain parts of the reactor being omitted or drawn in cutaways for visibility reasons, and
- figures 2 and 3 are schematic sectional views along plane II and plane III, respectively, of figure 1.

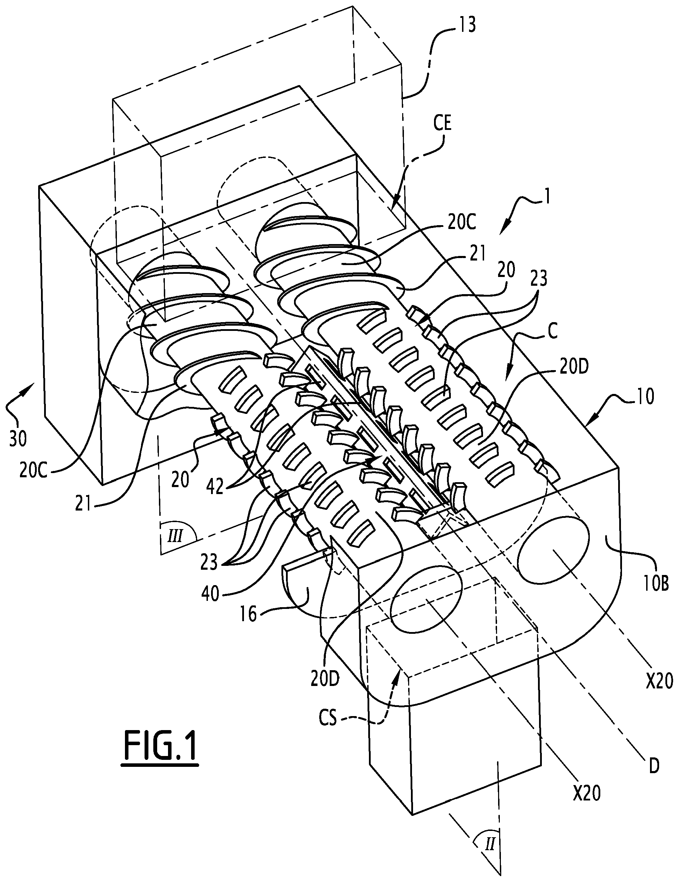

Figures 1 to 3 show a reactor 1 for reactivating solids. This reactor 1 in particular makes it possible to reactivate solids made up of a mixture of excess of alkaline reagent, which has not reacted with fumes to be cleaned from their acid pollutants, and salts resulting from the reaction between acid fume pollutants and a reagent for neutralizing the acid pollutants.

The reactor 1 comprises an elongate trough 10. The embodiment of the trough 10 is not limiting inasmuch as the trough 10 inwardly defines a reactivation chamber C inside which solids, once introduced, are reactivated by putting them in contact with a gaseous reactivation fluid, as explained below.

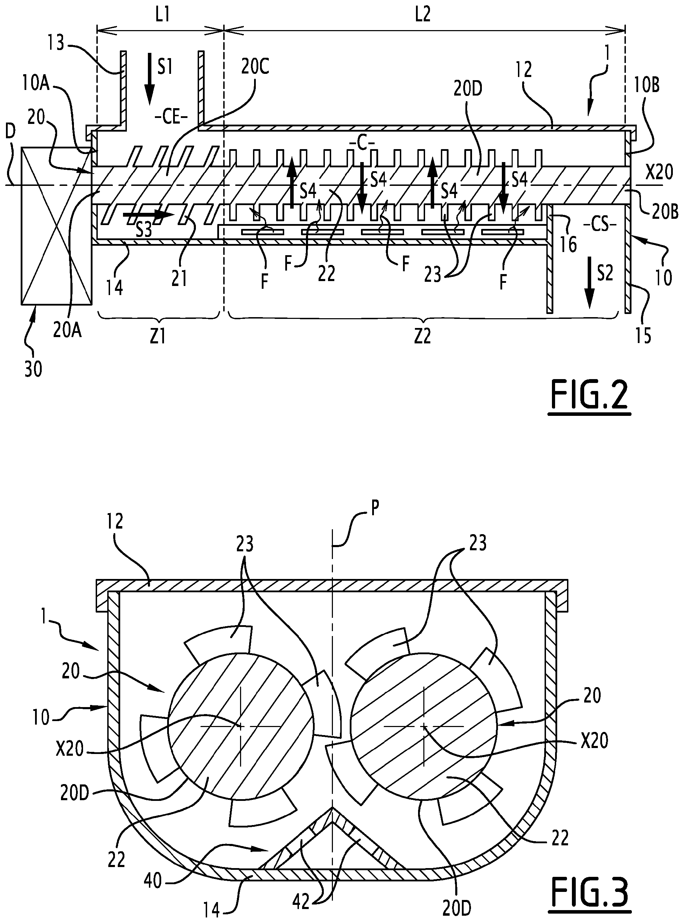

The geometry of the reactivation chamber C is not limiting inasmuch as it extends lengthwise in a longitudinal direction D from a first end 10A of the trough 10 to a second end 10B of the trough, opposite the end 10A. As clearly shown in figures 1 and 2, the reactivation chamber C has an inlet CE at the end 10A of the trough 10, while at the end 10B of the trough, the reactivation chamber has an outlet CS. The inlet CE of the reactivation chamber C is provided to allow the introduction, inside the reactivation chamber, of solids to be reactivated, in particular by gravity, as indicated by arrow S1 in figure 2. In practice, this inlet CE is defined through an upper cover 12 of the trough 10 that closes the reactivation chamber from above, the inlet CE for example being able to be poured by a chute 13 above the cover 12. The outlet CS of the reactivation chamber is provided to allow the discharge of the reactivated solids outside the chamber C, in particular by gravity, as indicated by arrow S2 in figure 2. In practice, this outlet CS is defined by the bottom 14 of the trough 10, while for example being able to be bordered by a discharge spout 15 below the bottom 14.

As shown in figures 1 to 3, the reactor 1 also comprises two shafts 20 that are arranged, at least for the most part, inside the reactivation chamber C. The two shafts 20 extend, in the reactivation chamber C, parallel to one another in the direction D. Thus, the shafts 20 run for the most of the chamber length. In a manner known in itself and that is not limiting, the opposite ends 20A and 20B of each shaft 20 are supported by the trough 10, respectively at the end 10A and at the end 10B of the trough.

The shafts 20 are provided each to be rotated around a central axis X20 of the shaft. In practice, the rotational driving of the shafts 20 is provided by a motor block 30, which, in the example embodiment considered in the figures, is engaged driving with the respective ends 20A of the shafts 20. Irrespective of its embodiment, the motor block 30 is advantageously designed to drive the shafts 20 at a same speed, comprised between two and thirty revolutions per minute, if applicable in respective rotation directions opposite one another.

As clearly shown in figure 2, each of the two shafts 20 comprises two parts that follow one another in the direction D and that are jointly arranged between the ends 20A and 20B of the shaft, i.e., a first part 20C and a second part 20D. The first part 20C thus connects the end 20A to the second part 20D, the latter connecting the first part 20C to the end 20B of the shaft in question.

The part 20C extends from the end 10A of the trough 10 toward the opposite end 10B, while having a length, i.e., a dimension in the direction D, that is denoted L1 in figure 2. The part 20D of each shaft extends from the end 10B of the trough 10 toward the opposite end 10A, while having a length denoted L2. For each shaft 10, the parts 20C and 20D are distinguished, *inter alia,* by their effect on the solids contained in the reactivation chamber C, as explained below.

The part 20C of each shaft 20 is designed essentially, or even exclusively, to convey the solids contained in the reactivation chamber C, from the end 10A of the trough 10 toward the end 10B. To that end, this part 20C is provided with a coil 21 for conveying solids, which, in the example embodiment considered in the figures, winds continuously around a central hub 22 of the corresponding shaft 20, centered on the axis X20. The part 20C of each shaft 20 is thus for example comparable to an Archimedes screw. More generally, the part 20C of the shaft 20 forms a conveying device for the solids.

The part 20D of each shaft 20 is designed essentially, or even exclusively, to stir the solids contained in the reactivation chamber C, aerating these solids. To that end, this part 20D is provided with blades 23 for mixing solids, which, in the example embodiment considered in figures, extend individually protruding from the hub 22 of the corresponding shaft, while being distributed regularly on this hub in the direction D. These blades 23 are, for example and non-limitingly, in the form of plates, shovels, etc. and are not necessarily planar. They may optionally be inclined to contribute marginally to conveying solids towards the end 10B of the trough 10.

Even though the part 20D of each shaft 20 may contribute marginally to solids transport in the reactivation chamber C toward the end 10B of the trough 10, it will be noted that the coil 21 of the part 20C does not extend in the part 20D. Furthermore, even though certain embodiments of the coil 21 may optionally contribute to causing a certain agitation of the solids in the reactivation chamber C, the blades 23 of the part 20D are not found in the part 20C. In practice, in the embodiment considered in the figures, the material continuity of each shaft 20 between its ends 20A and 20B is done by the central hub 22, which runs in the direction D over both the entire part 20C and the entire part 20D.

Thus, the parts 20C of the shaft 20 and the parts 20D of the shaft 20 define two respective zones within the reactivation chamber C, which follow one another in the direction D and which interact with different respective effects on the solids respectively contained in these zones: in the first zone, which is denoted Z1 in figure 2 and which corresponds to the respective first part 20C of the shaft 20, the solids introduced into the reactivation chamber C by the inlet CE that is arranged above the respective parts 20C of the shaft 20 are essentially, or even exclusively, conveyed by these parts 20C as indicated by an arrow S3 in figure 2, to a second zone, denoted Z2 and corresponding to the second respective parts 20D of the shaft 20, in which the solids coming from the first zone Z1 are essentially, or even exclusively, mixed by these parts 20D of the shafts, as indicated by arrows S4 in figure 2. At the end of the zone Z2 turned toward the end 10B of the trough 10, the solids are discharged from this zone Z2 via the outlet CS, which is situated below the respective parts 20D of the shafts 20, more specifically below the terminal longitudinal portion of these parts 20D, opposite the parts 20C of the shafts.

According to the invention, the zone Z1 is much shorter than the zone Z2 in the direction D: according to one feature of the invention, the length L1 thus represents between 10% and 33% of the sum of the lengths L1 and L2, with the understanding that the length L2 therefore necessarily represents between 67% and 90% of the sum of the lengths L1 and L2.

According to one optional arrangement implemented in the example embodiment considered in figures, the trough 10 comprises a weir 16, arranged in the reactivation chamber C and situated on the side of the outlet CS turned toward the end 10A of the trough: as clearly shown in figure 2, this weir 16 rises from the bottom 14 of the trough 10 so as to prevent the solids contained in the reactivation chamber C from reaching the outlet CS as long as the thickness of the solids is smaller than the height of the weir relative to the bottom of the trough. It will be understood that the weir 16 thus makes it possible to maintain a minimum solids level, and a minimum inventory, in the zone Z2 of the reactivation chamber C.

As clearly shown in figures 1 to 3, the reactor 1 further comprises a duct 40 for distributing a gaseous reactivation fluid. This duct 40 is designed to distribute, in the reactivation chamber C, a gaseous reactivation fluid that is made up of steam or that is made up of a mixture of air, fumes and steam. More generally, the composition of the gaseous reactivation fluid is not limiting.

The duct 40 is arranged in the reactivation chamber C, while being located on the bottom 14 of the trough 10. Furthermore, the duct 40 extends in the direction D, and below the shafts 20, more specifically running below at least the second part 20D of these shafts 20: via orifices 42 of the duct 40, gaseous reactivation fluid, supplying the duct, enters the lower part of the reactivation chamber C, in particular enters the lower part of the zone Z2, as indicated by the arrows F in figure 2. During use, this gaseous fluid mixes easily with the solids contained in the zone Z2 of the reactivation chamber C due to the fact that these residues are mixed therein by the respective parts 20D of the shafts 20: indeed, this gaseous fluid flows easily within the mixed solids, which promotes putting the latter in contact with the gaseous fluid. In this way, these solids are effectively reactivated.

According to one practical, economical and effective embodiment, which is implemented in the example embodiment considered in figures, the duct 40 is made up of a folded sheet having a cross-section arranged perpendicular to the direction D and in the form of an inverted "V", i.e., a "V" whereof the apex is turned away from the bottom 14 of the trough 10. Of course, other embodiments can be considered for the duct 40.

According to one preferred, but optional aspect, relative to the arrangement of the duct 40 inside the trough 10, the duct 40 is, like in the example considered in figures, arranged globally in a geometric plane P, which is vertical and parallel to the direction D, while the two shafts 20 are arranged symmetrically relative to this geometric plane P, as clearly shown in figure 3. In this case, in order to homogenize the distribution of the gaseous reactivation fluid in the chamber C with respect to two shafts 20, at least some of the orifices 42 of the duct 40 will be advantageously be located on two sides of the geometric plane P, preferably associated in pairs.

In practice, the shape, arrangement and number of the orifices 42 of the duct 40 are not limiting with respect to the invention. Thus, according to one possible embodiment, each or at least some of the orifices 42 assume the form of slots, which each extend lengthwise in the direction D and which are for example situated at the base of the duct 40, i.e., at its junction with the bottom 14 of the trough 10. It is also possible to consider that the duct 40 is provided with a single orifice 42, in the form of a long slot that runs at least below all or part of the parts 20D of the shaft 20. Alternatively, two such long slots can also be considered for the orifices 42, while being situated laterally on either side of the duct. In the embodiments where several orifices 42 are used, at least some of them may advantageously be distributed in the direction D, preferably substantially regularly. According to one practical and effective embodiment, between two and thirty orifices 42 are provided in the zone Z2 of the reactivation chamber C, i.e., between two and thirty orifices 42 are provided over the respective parts 20D of the shaft 20.

Likewise, the embodiment of the means making it possible to supply the duct 40 with the reactivation fluid is not limiting, these means being known in themselves. As an example, these means comprise branches and flanges, arranged on the bottom of the duct 40.

Furthermore, optionally, the duct 40 can be segmented so as to control, segment by segment, the flow rate of the reactivation fluid allowed into the chamber C by the orifices 42.

Lastly, various optional developments of the reactor 1 can be considered.

Thus, in a manner not shown in the figures, the trough 10 can be provided with one or several degassing vents, arranged above the second part 20D of the shaft 20. This or these vents make it possible to discharge surplus gaseous reactivation fluid, present in the ceiling of the reactor 1, in other words in the part of the reactivation chamber C situated above the parts 20D of the shaft 20 and not occupied by the solids.

Also in a manner not shown in figures, the trough 10 can be provided with one or several gas intake branches, arranged above the shaft 20, in particular above their second parts 20D. This or these branches in particular make it possible to supply the ceiling of the reactor 1 with a gas, for example and non-limitingly, air.

## Claims

1. A reactor (1) for reactivating solids, comprising:
- an elongate trough (10), which defines a reactivation chamber (C) extending in a longitudinal direction (D) from a first end (10A) of the trough to a second end (10B) of the trough, this reactivation chamber having:
an inlet (CE), which is situated at the first end of the trough and by which solids to be reactivated enter the reactivation chamber, and
an outlet (CS), which is situated at the second end of the trough and by which the reactivated solids leave the reactivation chamber;
- two shafts (20), which are arranged in the reactivation chamber (C) and which extend therein parallel to one another in the longitudinal direction (D), each of the two shafts successively comprising:
a first part (20C), which extends from the first end (10A) of the trough (10) toward the second end (10B) of the trough and which is provided with a coil (21) for conveying solids, and
a second part (20D), which extends from the second end of the trough toward the first end of the trough and which is provided with blades (23) for mixing solids, the length (L1) of the first part (20C) representing between 10% and 33% of the sum of the respective lengths (L1, L2) of the first and second parts; and
- a duct (40) for distributing a gaseous reactivation fluid, which is arranged in the reactivation chamber (C) at bottom of the trough (10), which extends in the longitudinal direction (D) while running below at least the second part (20D) of the two shafts (20), and which is provided with one or several intake orifices (42) for entering the gaseous reactivation fluid into the reactivation chamber.

2. The reactor (1) according to claim 1,
wherein each shaft (20) includes a central hub (22) that runs in the longitudinal direction (D) over the entire first part (20C) and over the entire second part (20D) of the shaft,
wherein, in the first part (20D) of each shaft (20), the coil (21) of the shaft winds continuously around the hub (22) of the shaft, and
wherein, in the second part (20D) of each shaft (20), the blades (23) of the shaft extend individually protruding from the hub (22) of the shaft.

3. The reactor (1) according to one of claims 1 or 2,
wherein the two shafts (20) are arranged symmetrically relative to a geometric plane (P), which is vertical and parallel to the longitudinal direction (D), and
wherein the duct (40) is arranged globally in said geometric plane (P).

4. The reactor according to claim 3, wherein at least some of the intake orifices (42) of the duct (40) are located on both sides of the geometric plane (P).

5. The reactor according to claim 4, wherein at least some of the intake orifices (42) of the duct (40) that are located on both sides of the geometric plane (P) are associated in pairs.

6. The reactor according to any one of the preceding claims, wherein at least some of the intake orifices (42) of the duct (40) are distributed in the longitudinal direction (D).

7. The reactor according to claim 6, wherein at least some of the intake orifices (42) of the duct (40) that are distributed in the longitudinal direction (D) are distributed substantially uniformly in the longitudinal direction (D).

8. The reactor according to any one of the preceding claims, wherein the intake orifice or at least one of the intake orifices (42) of the duct (40) is a slot, which extends lengthwise in the longitudinal direction (D).

9. The reactor according to claim 8, wherein the slot is situated at the base of the duct (40).

10. The reactor according to any one of the preceding claims, wherein the duct (40) is provided with between two and thirty intake orifices (42) below the second part (20D) of the shafts (20).

11. The reactor according to any one of the preceding claims, wherein the duct (40) is made up of a folded sheet having a cross-section arranged perpendicular to the direction (D) and which is in the form of a "V" whereof the apex is turned away from the bottom (14) of the trough (10).

12. The reactor according to any one of the preceding claims, wherein the trough (10) comprises a weir (16), which is arranged in the reactivation chamber (C) on the side of the outlet (CS) turned toward the first end (10A) of the trough, and which rises from a bottom (14) of the trough (10) so as to prevent the solids contained in the reactivation chamber from reaching the outlet as long as the thickness of the solids is smaller than the height of the weir relative to the bottom of the trough.

13. The reactor according to any one of the preceding claims, wherein the reactor (1) further comprises a motor block (30) provided to drive the two shafts (20) at the same speed, comprised between two and thirty revolutions per minute.

14. The reactor according to claim 13, wherein the motor block (30) is suitable for driving the two shafts (20) in opposite respective rotation directions.

15. The reactor according to any one of the preceding claims, wherein the trough (10) is provided with at least one degassing vent, which is arranged above the second part (20D) of the two shafts (20).

16. The reactor according to any one of the preceding claims, wherein the trough (10) is provided with at least one gas intake branch, which is arranged above the two shafts (20).

## Patentansprüche

1. Reaktor (1) zur Reaktivierung von Feststoffen, umfassend:
- einen länglichen Trog (10), der eine Reaktivierungskammer (C) definiert, die sich in einer Längsrichtung (D) von einem ersten Ende (10A) des Trogs zu einem zweiten Ende (10B) des Trogs erstreckt, wobei diese Reaktivierungskammer aufweist:
einen Einlass (CE), der am ersten Ende des Troges angeordnet ist und durch den zu reaktivierende Feststoffe in die Reaktivierungskammer gelangen, und
einen Auslass (CS), der am zweiten Ende des Troges angeordnet ist und durch den die reaktivierten Feststoffe die Reaktivierungskammer verlassen;
- zwei Schäfte (20), die in der Reaktivierungskammer (C) angeordnet sind und die sich darin parallel zueinander in Längsrichtung (D) erstrecken, wobei jeder der beiden Schäfte aufeinanderfolgend umfasst:
einen ersten Teil (20C), der sich von dem ersten Ende (10A) des Trogs (10) zu dem zweiten Ende (10B) des Trogs erstreckt und der mit einer Wendel (21) zum Fördern von Feststoffen versehen ist, und
einen zweiten Teil (20D), der sich vom zweiten Ende des Trogs zum ersten Ende des Trogs erstreckt und der mit Flügeln (23) zum Mischen von Feststoffen versehen ist, wobei die Länge (L1) des ersten Teils (20C) zwischen 10% und 33% der Summe der jeweiligen Längen (L1, L2) des ersten und zweiten Teils ausmacht; und
- einen Kanal (40) zum Verteilen eines gasförmigen Reaktivierungsfluids, der in der Reaktivierungskammer (C) am Boden des Trogs (10) angeordnet ist, der sich in Längsrichtung (D) erstreckt, wobei er unterhalb mindestens des zweiten Teils (20D) der beiden Schäfte (20) verläuft, und der mit einer oder mehreren Einlassöffnungen (42) zum Einleiten des gasförmigen Reaktivierungsfluids in die Reaktivierungskammer versehen ist.

2. Reaktor (1) nach Anspruch 1,
wobei jeder Schaft (20) einen zentralen Kern (22) aufweist, der in Längsrichtung (D) über den gesamten ersten Teil (20C) und über den gesamten zweiten Teil (20D) des Schafts verläuft,
wobei in dem ersten Teil (20D) jedes Schafts (20) die Wendel (21) des Schafts sich kontinuierlich um den Kern (22) des Schafts windet, und
wobei sich im zweiten Teil (20D) jedes Schafts (20) die Flügel (23) des Schafts einzeln von dem Kern (22) des Schafts vorstehend erstrecken.

3. Reaktor (1) nach einem der Ansprüche 1 oder 2,
wobei die beiden Schäfte (20) in Bezug auf eine vertikal und parallel zur Längsrichtung (D) verlaufende geometrische Ebene (P) symmetrisch angeordnet sind, und
wobei der Kanal (40) global in der geometrischen Ebene (P) angeordnet ist.

4. Reaktor nach Anspruch 3, bei dem mindestens einige der Einlassöffnungen (42) des Kanals (40) auf beiden Seiten der geometrischen Ebene (P) angeordnet sind.

5. Reaktor nach Anspruch 4, bei dem mindestens einige der Einlassöffnungen (42) des Kanals (40), die auf beiden Seiten der geometrischen Ebene (P) angeordnet sind, paarweise zugeordnet sind.

6. Reaktor nach einem der vorhergehenden Ansprüche, bei dem mindestens einige der Eintrittsöffnungen (42) des Kanals (40) in Längsrichtung (D) verteilt sind.

7. Reaktor nach Anspruch 6, bei dem mindestens einige der in Längsrichtung (D) verteilten Einlassöffnungen (42) des Kanals (40) im Wesentlichen gleichmäßig in Längsrichtung (D) verteilt sind.

8. Reaktor nach einem der vorhergehenden Ansprüche, **dadurch gekennzeichnet, dass** die Einlassöffnung oder mindestens eine der Einlassöffnungen (42) des Kanals (40) ein Schlitz ist, der sich in Längsrichtung (D) erstreckt.

9. Reaktor nach Anspruch 8, wobei sich der Schlitz an der Basis des Kanals (40) befindet.

10. Reaktor nach einem der vorhergehenden Ansprüche, wobei der Kanal (40) unterhalb des zweiten Teils (20D) des Schafts (20) mit zwischen zwei und dreißig Einlassöffnungen (42) versehen ist.

11. Reaktor nach einem der vorhergehenden Ansprüche, **dadurch gekennzeichnet, dass** der Kanal (40) aus einer gefalteten Platte besteht, die einen Querschnitt aufweist, der senkrecht zur Richtung (D) angeordnet ist und die Form eines "V" hat, dessen Scheitelpunkt vom Boden (14) des Trogs (10) abgewandt ist.

12. Reaktor nach einem der vorhergehenden Ansprüche, wobei der Trog (10) einen Damm (16) aufweist, der in der Reaktivierungskammer (C) auf der Seite des Auslasses (CS) angeordnet ist, die dem ersten Ende (10A) des Troges zugewandt ist, und der sich von einem Boden (14) des Troges (10) nach oben erstreckt, um zu verhindern, dass die in der Reaktivierungskammer enthaltenen Feststoffe den Auslass erreichen, solange die Dicke der Feststoffe kleiner als die Höhe des Damms relativ zum Boden des Troges ist.

13. Reaktor nach einem der vorhergehenden Ansprüche, wobei der Reaktor (1) ferner einen Motorblock (30) aufweist, der dazu vorgesehen ist, die zwei Schäfte (20) mit der gleichen Geschwindigkeit, die zwischen zwei und dreißig Umdrehungen pro Minute liegt, anzutreiben.

14. Reaktor nach Anspruch 13, bei dem der Motorblock (30) geeignet ist, die beiden Schäfte (20) in jeweils entgegengesetzten Drehrichtungen anzutreiben.

15. Reaktor nach einem der vorstehenden Ansprüche, wobei der Trog (10) mit mindestens einer Entgasungsöffnung versehen ist, die über dem zweiten Teil (20D) der beiden Schäfte (20) angeordnet ist.

16. Reaktor nach einem der vorhergehenden Ansprüche, wobei der Trog (10) mit mindestens einem Gaseintrittsstutzen versehen ist, der oberhalb der beiden Schäfte (20) angeordnet ist.

## Revendications

1. Réacteur (1) de réactivation de solides, comprenant :
- une auge (10) allongée, qui définit une chambre de réactivation (C) s'étendant dans une direction longitudinale (D) d'une première extrémité (10A) de l'auge à une seconde extrémité (10B) de l'auge, cette chambre de réactivation ayant :
- une entrée (CE), qui est située à la première extrémité de l'auge et par laquelle des solides à réactiver entrent dans la chambre de réactivation, et
- une sortie (CS), qui est située à la seconde extrémité de l'auge et par laquelle les solides réactivés sortent de la chambre de réactivation ;
- deux arbres (20), qui sont agencés dans la chambre de réactivation (C) et qui s'y étendent parallèlement l'un à l'autre dans la direction longitudinale (D), chacun des deux arbres comprenant successivement :
- une première partie (20C), qui s'étend depuis la première extrémité (10A) de l'auge (10) vers la seconde extrémité (10B) de l'auge et qui est munie d'une hélice (21) de convoyage des solides, et
- une seconde partie (20D), qui s'étend depuis la seconde extrémité de l'auge vers la première extrémité de l'auge et qui est munie de pales (23) de brassage des solides, la longueur (L1) de la première partie (20C) représentant entre 10% et 33% de la somme des longueurs respectives (L1, L2) des première et seconde parties ; et
- une goulotte (40) de distribution d'un fluide gazeux de réactivation, qui est agencée dans la chambre de réactivation (C) au fond de l'auge (10), qui s'étend dans la direction longitudinale (D) en courant au-dessous d'au moins la seconde partie (20D) des deux arbres (20), et qui est pourvue d'un ou de plusieurs orifices (42) d'admission du fluide dans la chambre de réactivation.

2. Réacteur (1) suivant la revendication 1,
dans lequel chaque arbre (20) comporte un moyeu central (22) qui court dans la direction longitudinale (D) sur toute la première partie (20C) et toute la seconde partie (20D) de l'arbre,
dans lequel, dans la première partie (20D) de chaque arbre (20), l'hélice (21) de l'arbre s'enroule continument autour du moyeu (22) de l'arbre, et
dans lequel, dans la seconde partie (20D) de chaque arbre (20), les pales (23) de l'arbre s'étendent individuellement en saillie du moyeu (22) de l'arbre.

3. Réacteur (1) suivant l'une des revendications 1 ou 2,
dans lequel les deux arbres (20) sont agencés de manière symétrique par rapport à un plan géométrique (P) qui est vertical et parallèle à la direction longitudinale (D), et
dans lequel la goulotte (40) est agencée globalement dans ce plan géométrique (P).

4. Réacteur suivant la revendication 3, dans lequel au moins certains des orifices (42) de la goulotte (40) sont répartis des deux côtés du plan géométrique (P).

5. Réacteur suivant de la revendication 4, dans lequel les au moins certains des orifices (42) de la goulotte (40) qui sont répartis des deux côtés du plan géométrique (P) sont associés par paire(s).

6. Réacteur suivant l'une quelconque des revendications précédentes, dans lequel au moins certains des orifices (42) de la goulotte (40) sont répartis dans la direction longitudinale (D).

7. Réacteur suivant la revendication 6, dans lequel les au moins certains des orifices (42) de la goulotte (40) qui sont répartis dans la direction longitudinale (D) sont répartis de manière sensiblement uniforme dans la direction longitudinale (D).

8. Réacteur suivant l'une quelconque des revendications précédentes, dans lequel le ou au moins l'un des orifices (42) de la goulotte (40) est une fente, qui s'étend en longueur dans la direction longitudinale (D).

9. Réacteur suivant la revendication 8, dans lequel la fente est située à la base de la goulotte (40).

10. Réacteur suivant l'une quelconque des revendications précédentes, dans lequel la goulotte (40) est pourvue d'entre deux et trente orifices (42) à l'aplomb de la seconde partie (20D) des arbres (20).

11. Réacteur suivant l'une quelconque des revendications précédentes, dans lequel la goulotte (40) est constituée d'une tôle ayant une section transversale qui est agencée perpendiculairement à la direction longitudinale (D) et qui a une forme en « V » dont le sommet est tourné à l'opposé du fond (14) de l'auge (10).

12. Réacteur suivant l'une quelconque des revendications précédentes, dans lequel l'auge (10) comprend un barrage (16), qui est agencé dans la chambre de réactivation (C) sur le côté de la sortie (CS) tourné vers la première extrémité (10A) de l'auge, et qui s'élève depuis le fond (14) de l'auge (10) de manière à empêcher les solides contenus dans la chambre de réactivation d'atteindre la sortie tant que l'épaisseur des solides est inférieure à la hauteur du barrage par rapport au fond de l'auge.

13. Réacteur suivant l'une quelconque des revendications précédentes, dans lequel le réacteur (1) comprend en outre un bloc moteur (30) prévu pour entrainer les deux arbres (20) à la même vitesse, comprise entre deux et trente tours par minute.

14. Réacteur suivant la revendication 13, dans lequel le bloc moteur (30) est adapté pour entrainer les deux arbres (20) dans des sens de rotation respectifs qui sont opposés.

15. Réacteur suivant l'une quelconque des revendications précédentes, dans lequel l'auge (10) est pourvue d'au moins un évent de dégazage, qui est agencé au-dessus de la seconde partie (20D) des deux arbres (20).

16. Réacteur suivant l'une quelconque des revendications précédentes, dans lequel l'auge (10) est pourvue d'au moins un piquage d'admission de gaz, qui est agencé au-dessus des deux arbres (20).
